# EUROPEAN PATENT SPECIFICATION

(11) **EP 0 487 076 B1**
(45) Date of publication and mention of the grant of the patent: **29.01.1997**
(21) Application number: 91119856.2
(22) Date of filing: 21.11.1991
(51) Int. Cl.: B29C 45/60

(54) **Screw of injection molding machine**
Schnecke einer Spritzgiessmaschine
Vis d'une machine à mouler par injection

(30) Priority: 22.11.1990 JP 121806/90 U
(43) Date of publication of application: 27.05.1992
(73) Proprietor: SUMITOMO HEAVY INDUSTRIES, LTD, Tokyo 100 (JP)
(72) Inventor: Suumen, Hiroyoshi, Sumitomo Sanno Gaden Taun A-401, Chiba-shi (JP)
(74) Representative: Henkel, Feiler, Hänzel & Partner

(56) References cited:
- DE-B- 1 283 496
- US-A- 4 185 060

## Description

### BACKGROUND OF THE INVENTION

The present invention relates to a plasticizing device of an injection molding machine according to the precharacterising part of claim 1.

Fig. 3 schematically shows a conventional screw 11, in particular the portion around a resin supply port 13.

The operation of the conventional in-line screw 11 relies upon frictional force alone so that it could never stably plasticize the material. In particular, platicization is often rendered unstable when a lubricating oil is mixed in the resin material for the purpose of improving lubrication of the molded product.

Unstable plasticization is caused when the resin material 4 cannot smoothly be fed forward due to clinging of the resin on the screw 11. This problem takes place when the friction between the resin 4 and the surface 11b of the screw 11 is not substantially different from the friction between the resin 4 and the inner surface 12a of the cylinder.

Good plasticizing effect is obtained when the friction between the resin 4 and the inner surface 12a of the cylinder is considerably higher than that between the resin 4 and the screw surface 11b. In order to realise this condition, attempts have been made such as roughening of the inner surface 12a of the cylinder and provision of axial grooves in the inner surface 12a of the cylinder.

These attempts such as roughening or grooving of the cylinder inner surface 12a cause problems such as an increase in the driving torque for driving the screw 11 or imperfect plasticization particularly when the speed of the screw is increased.

From DE-B-12 83 496 there is known a plasticizing device as defined by the preamble of the claim. In this known device the parallelogramic axial section shape inclined towards the discharge end of the screw is unchanged over the entire length of the screw. By the said construction of the screw flight the catching ability of resin pellets is improved. However due to the fact that said parallelogramic axial sectional shape extends unchanged over the entire length of the screw the kneading and labour efficiency is deteriorated for example in the work of changing the colour of the resin to be treated. Moreover, stagnation of the resin pellets may occur.

Accordingly, an object of the present invention is to provide a plasticizing device of an injection molding machine which can overcome the above described problems of the prior art.

To this end, according to the invention, a device defined by the preamble of the claim, comprises the features of the characterising part of the claim.

A device according to the invention has, as far as the efficiency in the colour changing work is concerned, the same efficiency as conventional screw flight shapes, what is highly desirable, and at the same time the catching ability of resin pellets is improved over such ability of the conventional screws.

From US-A-4 185 060 there is known a screw for use in injection molding structural foam plastic products in which the housing or barrel is provided with a vent passageway at an intermediate position of the barrel between the inlet for the mixture of thermoplastic granules and a blowing agent and the discharge passageway for injecting molten plastic. The screw has two compression stages with a decompression stage therebetween. The mixture is compressed, as it advances through the first compression stage and releases moisture vapors and other unwanted volatiles at the decompression stage, the released vapors and volatiles escaping through the vent passageway. Through the second compression stage the mixture is cmpressed and brought in a molten condition suitable for injection molding at the discharge passageway. At the vent zone the forward faces of the screw flights are undercut similar to the screw flight portion in the plasticizing device of the present invention facing the resin supply port having the parallelogramic axial section shape. The said known screw flight shape serves to provide a concavity to minimize the tendency for the plastic mass to flow radially outwardly through the vent.

### BRIEF DESCRIPTION OF THE DRAWINGS

Fig. 1 is a sectional view of a critical portion of the screw in accordance with the present invention;
Fig. 2 is a sectional view of a critical portion of a known screw; and
Fig. 3 is a sectional view of a portion of a plasticizing device which incorporates the screw shown in Fig. 2.

### DESCRIPTION OF THE PREFERRED EMBODIMENTS

Fig. 2 shows a screw flight of screw in the conventional in-line type plasticizing device described before in connection with Fig. 3. The flight 11a has a trapezoidal cross-section, so that the resin pellets 4 supplied through the supply port 13 are lifted by the flank of the flight 11a so as to be displaced radially outward. Consequently, plasticizing effect has large dependency on the friction between the resin pellets 4 and the inner surface 12a of the cylinder.

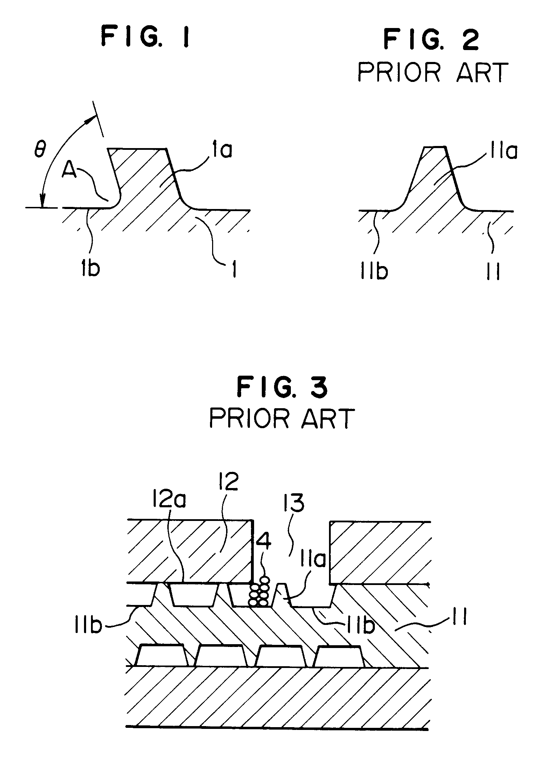

Fig. 1 shows the sectional shape of the flight 1a of the screw in accordance with the present invention. As will be seen from this Figure, the screw flight 1a has a parallelogrammic sectional shape when taken along an axial plane, and this axial sectional shape is inclined towards the discharge end of the screw. Therefore, the resin pellets 4 which have been introduced into the space A is prevented by the inclined flank of the screw flight 1a from being displaced radially outward. Consequently, the resin pellets are advanced smoothly towards the discharge end in accordance with the rotation of the screw 1, thus ensuring high stability of plasticization.

The above-mentioned inclined parallelogrammic sectional shape is adopted only in the portion of the screw adjacent the resin supply port 13, in order to prevent stagnation of the resin pellets.

The screw 1 of the present invention can be produced by machining a single cylindrical blank so as to leave spiral flight 1a such that the angle θ of inclination is set to be equal to or less than 90 degrees. The portion of the screw flight having the inclined parallelogrammic sectional shape extends over a length which is substantially equal to the sum of the screw pitch and the axial length of the resin supply port.

The in-line type plasticizing device having the screw in accordance with the present invention can effectively plasticize and meter the resin even when the resin contains an oil, without being accompanied by troubles such as increase in the driving torque and imperfect plasticization. Furthermore, stagnation of the resin is avoided because the parallelogrammic inclined sectional shape is adopted only on a portion of the screw flight.

## Claims

1. A plasticizing device of an injection molding machine, comprising a housing (12) having a hollow interior bounded by a substantially cylindrical interior wall (12a), and a resin supply port (13) extending through said cylindrical interior wall (12a) of said housing (12) in communication with said hollow interior; a screw (1) having a screw thread for plasticizing and driving resin pellets axially through said hollow interior of said housing (12), said screw thread extending in a generally radial direction toward said cylindrical interior wall (12a), the screw flight of the screw (11) facing the resin supply port (13) having a prallelogramic axial sectional shape, which is inclined toward the discharge end of the screw (11), characterised in that said parallelogramic axial sectional shape (1a) of the screw flight which is inclined towards the discharge end of the screw (11) is provided only at the portion of the screw flight of the screw (11) facing the resin supply port (13) and extends over a length which is substantially equal to the sum of the screw pitch and the axial length of the resin supply port (13).

## Patentansprüche

1. Plastifiziervorrichtung einer Spritzgießmaschine, umfassend ein Gehäuse (12) mit einem durch eine im wesentlichen zylindrische Innenwand (12a) begrenzten hohlen Innenraum und einer die zylindrische Innenwand (12a) des Gehäuses (12) in Verbindung mit dem hohlen Innenraum durchsetzenden Harzspeiseöffnung (13); (und) eine Schnecke (1) mit einem Schneckengewinde zum Plastifizieren von Harzpellets und Treiben derselben axial durch den hohlen Innenraum des Gehäuses (12), wobei das Schneckengewinde in einer im wesentlichen radialen Richtung zur zylindrischen Innenwand (12a) hin verläuft und der der Harzspeiseöffnung (13) zugewandte Schnecken(gewinde)gang der Schnecke (1) eine parallelogrammartige Axialschnittform aufweist, die in Richtung auf das Austragende der Schnecke (1) geneigt bzw. schräggestellt ist; dadurch gekennzeichnet, daß die parallelogrammartige Axialschnittform, die in Richtung auf das Austragende der Schnecke (1) geneigt bzw. schräggestellt ist, nur an (in) dem der Harzspeiseöffnung (13) zugewandten Abschnitt oder Bereich des Schneckengangs der Schnecke (1) vorgesehen ist und sich über eine Länge erstreckt, die im wesentlichen der Summe aus der Schnecken(gang)steigung und der axialen Länge der Harzspeiseöffnung (13) gleich ist.

## Revendications

1. Dispositif de plastification de machine de moulage par injection, comprenant un boîtier (12) ayant une partie interne creuse délimitée par une paroi interne pratiquement cylindrique (12a), et un orifice (13) de transmission de résine traversant la paroi interne cylindrique (12a) du boîtier (12) en communication avec l'intérieur creux, une vis (1) ayant un filet, destinée à plastifier et à entraîner axialement les granulés de résine le long de l'intérieur creux du boîtier (12), le filet ayant une direction générale radiale vers la paroi interne cylindrique (12a), la spire de la vis (11) tournée vers l'orifice (13) d'alimentation en résine ayant une configuration en parallélogramme en coupe axiale, inclinée vers l'extrémité d'évacuation de la vis (11), caractérisé en ce que la configuration en parallélogramme en coupe axiale (1a) de la spire de la vis qui est inclinée vers l'extrémité d'évacuation de la vis (11) est disposée uniquement dans la partie de la spire de la vis (11) tournée vers l'orifice de transmission de résine (13) et est formée sur une longueur pratiquement égale à la somme du pas de la vis et de la dimension axiale de l'orifice (13) de transmission de résine.
